# EUROPEAN PATENT APPLICATION

(11) **EP 0 990 619 A1**
(43) Date of publication of application: **05.04.2000**
(21) Application number: 99118025.8
(22) Date of filing: 21.09.1999
(51) Int. Cl.: B67D 5/04, B01D 5/00

(54) **Method for recovering gasoline vapors in filling stations and apparatus for performing the method**

(30) Priority: 29.09.1998 IT BO980551
(71) Applicant: SILEA S.r.l., I-40064 Ozzano Emilia (Bologna) (IT)
(72) Inventor: Zucchini, Giorgio, 40100 Bologna (IT)
(74) Representative: Modiano, Guido, Dr.-Ing.

(57) **Abstract**

A method for recovering gasoline vapors in filling stations entails extracting the gasoline vapors during fuel delivery and dehumidifying the extracted vapors by passage through a cartridge (11) which contains a dessiccant. The dehumidified vapors are then condensed into a liquid form by heat exchange with an intermediate fluid kept at the cooling temperature in contact with a heat exchanger (19, 20) through which a coolant flows. The liquid condensate is then separated and recovered and the appropriately treated and conditioned residual gaseous mixture is released into the atmosphere.

## Description

The present invention relates to a method for recovering gasoline vapors in filling stations and the like and to an apparatus for performing the method without expensive connection systems.

It is known that during the delivery of liquid fuels, such as e.g. gasoline and the like, generally performed by means of conventional nozzles which are inserted in the inlet of the tank of vehicles, the vapors contained in the tank escape in an amount equal in volume to the fuel fed into the tank, with severe environmental pollution effects.

Recent statutory provisions have ruled that fuel pumps in filling stations must be equipped with adapted gasoline vapor recovery devices.

Various devices for recovering gasoline vapors have therefore been proposed which are generally based on the principle of extracting the gasoline vapors from the tank of the vehicles and sending said vapors to the fuel storage tanks.

It has also been proposed to condense the gasoline vapors taken from vehicle tanks into a liquid form; in this case the liquid condensate, i.e. the recovered fuel, is returned to the delivery circuit or sent to the storage tank. In practice, the nozzle is connected to the end of a coaxial or paired hose which provides a fuel delivery duct and a parallel gasoline vapor aspiration duct.

However, this solution has the drawback that it also causes the condensation of the water vapor that is present in the gas mixture extracted from the tank of the vehicles, which is indeed constituted by air and other non-condensable residues in addition to the gasoline vapors, and the drawback of requiring considerable activity of the refrigeration unit (start-stop), significantly reducing its efficiency. The presence of water in the liquid condensate is of course a severely damaging factor for the correct and continuous operation of the system.

The aim of the present invention is to solve the above problems, providing a method which allows to recover gasoline vapors in filling stations and to separate and discharge the gaseous residues, conveniently conditioned so that they can be returned to the atmosphere, condensing the gasoline vapors without forming aqueous condensate and without requiring continuous activation of the refrigeration unit, significantly increasing the efficiency of the system.

Within the scope of this aim, an object of the present invention is to provide an apparatus which allows to perform said method with a structure which is simple in concept, safely reliable in operation and versatile in use.

This aim and this object are both achieved, according to the invention, by the present method for recovering gasoline vapors in filling stations, characterized in that it entails performing: extraction of the gasoline vapors during fuel delivery; dehumidifying the extracted gasoline vapors; condensing the dehumidified vapors into a liquid form; separating and recovering the liquid condensate and releasing the appropriately conditioned residual gaseous mixture into the atmosphere.

The details of the invention will become apparent from the detailed description of a preferred embodiment of an apparatus for recovering gasoline vapors in filling stations, illustrated by way of non-limitative example in the accompanying drawings, wherein:

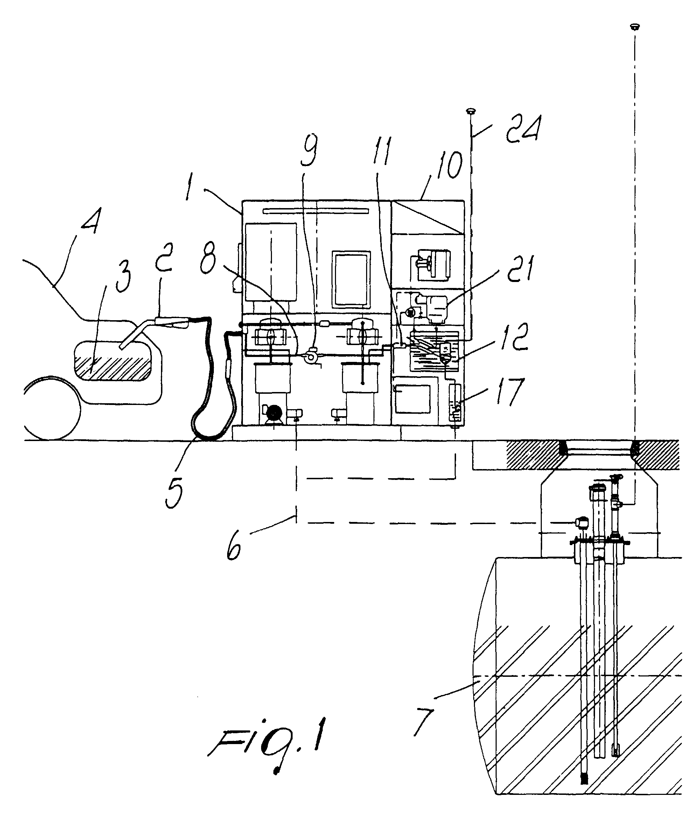

Figure 1 is a schematic view of a filling station provided with the apparatus for recovering gasoline vapors according to the invention;
Figure 2 is a vertical sectional view of a condenser for the dehumidified gasoline vapors applied in said apparatus.

With particular reference to the above figures, the reference numeral 1 generally designates a fuel pump of the filling station.

The fuel pump 1 is provided with a nozzle 2 which is adapted to be connected, in a conventional manner, to the inlet of the tank 3 of the motor vehicle 4 to be supplied with fuel. The nozzle 2 is connected to the free end of a hose 5 which runs from the pump 1 and is connected, by means of a pipe 6, to the underground storage tank 7 of the filling station.

The hose 5 of the nozzle 2 comprises, coaxially to the fuel passage duct, a gasoline vapor extraction duct which is connected, inside the pump 1, to a pipe 8 for delivering said gasoline vapors to the recovery apparatus according to the invention, generally designated by the reference numeral 10; a conventional vapor recovery pump 9 is arranged along the pipe 8.

The apparatus 10 has, along the pipe 8, a dehydration cartridge 11 which is meant to absorb the water vapor that is present in the gaseous mixture extracted during fuel dispensing. The dehydration cartridge 11, which can be regenerated automatically or by external intervention, contains an adapted dessiccant substance, e.g. silica gel.

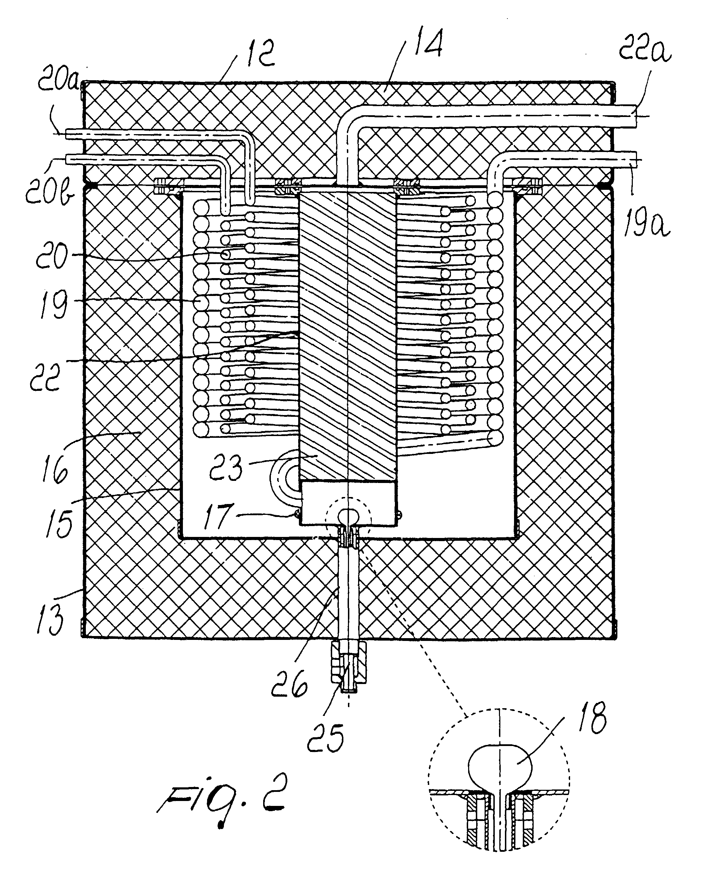

Downstream of the dehydration cartridge 11 along the direction of the flow of the gaseous mixture along the pipe 8 there is provided a gasoline vapor condenser 12 which is shown in detail in Figure 2.

The condenser 12 is substantially constituted by an external container 13 which is closed by an adapted cover 14 and encloses an internal container 15 with an adapted insulating material 16, e.g. foamed polyurethane, interposed.

The internal container 15 contains a tank 17 for accumulating the liquid condensate, which is provided with a float-operated condensate discharge 18. The accumulation tank 17 is connected, at the top, to a downward-flow coil 19 arranged inside said container 15 with the inlet 19a at the cover 14, which is supplied with the dehumidified vapors.

The coil 19 is immersed in an intermediate fluid which is conveniently constituted by a glycol-based antifreeze solution which fills the internal container 15. The intermediate fluid is kept at the appropriate cooling temperature in contact with heat exchanger means which are constituted by a double coil 20 through which a coolant flows, with an inlet 20a and an outlet 20b at the cover 14. The coil 20 is supplied by a direct-expansion refrigeration unit 21.

The accumulation tank 17 is connected, in its upper region, to a tubular column 22 which contains a filtering substance 23, preferably constituted by steel wool, with an outlet 22a at the cover 14 for discharging the gaseous residues produced by the step for condensing the dehumidified vapors into a liquid form. Said purified gas residues are discharged directly into the atmosphere by means of an adapted ventilation duct 24.

A duct 25 for extracting the liquid condensate, i.e. the recovered fuel, is connected to the bottom of the accumulation tank 17; said duct 25 passes coaxially through a discharge hole 26 of the condenser. The recovered fuel can be returned directly to circulation on the gasoline extraction line, directly upstream of the fuel pump. The method for recovering gasoline vapors therefore provides for the extraction of the gaseous mixture released by the tank 3 of the motor vehicle during fuel dispensing.

The gaseous mixture, extracted by means of the same nozzle 2 used for fuel dispensing, is conveyed to the dehydration cartridge 11, which absorbs the water vapor that is present in the flow that passes through it.

The dehumidified gaseous mixture containing the gasoline vapors is then introduced in the condenser 12, which has the purpose to make the gasoline vapors recoverable in liquid form, so as to allow direct release, into the atmosphere, of the gaseous residues extracted from the motor vehicle tank.

In the condenser 12, the gaseous mixture of air and gasoline vapors is cooled inside the coil 19, which has a downward flow in order to facilitate the entrainment of the liquid produced by vapor condensation; said liquid is collected in the accumulation tank 17 into which the coil 19 leads.

It should be noted that condensation is achieved by heat exchange with the intermediate fluid, which is kept at the appropriate cooling temperature in contact with the double coil 20 through which the coolant flows. This gives the system considerable thermal inertia and limits the activation cycles of the refrigeration unit 21, significantly increasing its efficiency.

As mentioned, the fuel collected in the accumulation tank 17 can be returned directly to circulation on the gasoline extraction line, upstream of the fuel pump, or can be periodically transferred into the storage tank of the apparatus.

The air and residual vapors instead rise along the column 22 of the condenser, where due to the low transit speed and of the presence of the filtering substance 23 constituted by steel wool, condensation continues and the microdroplets of condensate, that are present in the gaseous stream, are retained.

The gas that leaves the column 22 of the condenser is discharged directly into the atmosphere through the ventilation duct 24, proximate to the recovery apparatus or to the fuel pump.

The described method and the corresponding apparatus therefore achieve the aim of effectively recovering gasoline vapors in filling stations and of separating and discharging the gaseous residues, condensing said gasoline vapors. A prerogative of the method according to the invention is the fact that gasoline vapor recovery is performed without forming aqueous condensate.

In the practical execution of the invention, the materials used, as well as the shape and the dimensions, may be any according to the requirements.

The disclosures in Italian Patent Application No. BO98A000551 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for recovering gasoline vapors in filling stations, characterized in that it entails performing: extraction of the gasoline vapors during fuel delivery; dehumidifying the extracted gasoline vapors; condensing the dehumidified vapors into a liquid form; separating and recovering the liquid condensate.

2. The method according to claim 1, characterized in that said dehumidification of the gasoline vapors is performed by passage through a cartridge which contains a dessiccant.

3. The method according to claim 1, characterized in that it provides for introducing into the atmosphere the gaseous residues produced by said step for condensing into a liquid form the vapors dehumidified by passing through a column which contains an adapted condensation and separation material.

4. The method according to claim 1, characterized in that it provides for performing said condensation of the dehumidified vapors into a liquid form by heat exchange with an intermediate fluid kept at the cooling temperature in contact with heat exchanger means through which a coolant flows.

5. The method according to claim 4, characterized in that said heat exchange is achieved by means of the passage of said dehumidified vapors through a downward-flow coil immersed in said intermediate fluid.

6. An apparatus for recovering gasoline vapors in filling stations, characterized in that it comprises extraction means (2, 5, 8) for extracting the gasoline vapors during fuel delivery; dehumidifying means (11) for dehumidifying the extracted gasoline vapors; condensing means (12) for condensing into a liquid form the dehumidified vapors; recovering means (17, 25) for separating and recovering the liquid condensate.

7. The apparatus according to claim 6, characterized in that said dehumidifying means for dehumidifying the gasoline vapors comprises a dehydration cartridge (11) which contains a dessiccant and is arranged along a pipe (8) for delivery of said gasoline vapors extracted during fuel delivery.

8. The apparatus according to claim 7, characterized in that said dessiccant is of the silica gel type.

9. The apparatus according to claim 6, characterized in that said condensing means for condensing the dehumidified vapors into a liquid form comprises a condenser (12) which is provided with heat exchange means (20) for heat exchange with an intermediate fluid which is kept at the cooling temperature in contact with heat exchanger means (20) through which a coolant flows.

10. The apparatus according to claim 9, characterized in that said intermediate fluid is constituted by a glycol-based antifreeze solution.

11. The apparatus according to claim 9, characterized in that said heat exchange means comprises a downward-flow coil (20) supplied with said dehumidified vapors and connected to a tank (17) for accumulating the liquid condensate which is located inside a thermally insulated container (13, 15) and is immersed in said intermediate fluid, which fills said container (13, 15).

12. The apparatus according to claim 6, characterized in that said recovering means for separating and recovering the liquid condensate comprises an accumulation tank (17) which is supplied by said dehumidifying means (11) for dehumidifying the gasoline vapors and is connected, in the upper region, to a tubular column (22) which contains an adapted condensation and separation material (23) in order to discharge the gaseous residues produced through condensing into liquid form the dehumidified vapors adapted to give considerable thermal inertia to the apparatus, limiting the activation cycles of the refrigeration unit (21) and significantly increasing its efficiency.

13. The apparatus according to claim 12, characterized in that said condensation and separation material (23) is constituted by a filtering substance, particularly by steel wool.

14. The apparatus according to claim 12, characterized in that said tubular column (22) that contains said condensation and separation material (23) is connected to a ventilation duct (24) in order to release said gaseous residues into the atmosphere.

15. The apparatus according to claim 6, characterized in that said liquid condensate is recovered through a float-operated condensate discharge (18).
